# FASCICULE DE BREVET EUROPEEN

(11) **EP 1 216 173 B1**
(45) Date de publication et mention de la délivrance du brevet: **17.11.2004**
(21) Numéro de dépôt: 00967954.9
(22) Date de dépôt: 02.10.2000
(51) Int. Cl.: B60S 1/34, B60S 1/20, F16H 7/08

(54) **MECANISME D'ESSUIE-GLACE A BALAYAGE LINEAIRE ALTERNE COMPORTANT DES MOYENS PERFECTIONNES DE TENSION DU CABLE**
WECHSEL-LINEARES WISCHERSYSTEM MIT EINER VERBESSERTEN VORRICHTUNG ZUM SPANNEN DES KABELS
WIPER MECHANISM WITH ALTERNATING LINEAR WIPING COMPRISING IMPROVED MEANS FOR TENSIONING THE CABLE

(30) Priorité: 30.09.1999 FR 9912200
(43) Date de publication de la demande: 26.06.2002
(73) Titulaire: VALEO SYSTEMES D'ESSUYAGE, 78321 La Verrière (FR)
(72) Inventeur: HOSPITAL, Eric, F-78180 Montigny le Bretonneux (FR); BERGE, Gilles, F-78120 Rambouillet (FR)
(86) Numéro de dépôt international: PCT/FR2000/002768
(87) Numéro de publication internationale: WO 2001/023231

(56) Documents cités:
- EP-A- 0 472 505
- DE-A- 1 808 091
- GB-A- 1 412 753
- US-A- 1 578 531

## Description

La présente invention concerne un mécanisme d'essuie-glace à balayage linéaire alterné de véhicule automobile.

L'invention vise notamment à permettre l'essuyage d'un pare-brise ou d'une lunette arrière de véhicule automobile.

Selon la conception la plus répandue dans le domaine de la construction automobile, chaque essuie-glace effectue un balayage alterné de la vitre à essuyer dans un mouvement de rotation alternée autour d'un axe sensiblement fixe par rapport à la structure d'encadrement de la vitre.

Un tel balayage, qu'il soit effectué au moyen d'un seul essuie-glace ou de deux essuie-glaces à balayages parallèles ou antagonistes, laisse des parties relativement importantes de la vitre non essuyées.

Afin de remédier à ces inconvénients, il a déjà été proposé des mécanismes complexes visant à déplacer l'axe d'articulation de chaque bras d'essuie-glace afin d'accroître la surface effectivement essuyée.

Selon une autre conception, qui est par exemple décrite et représentée dans les documents DE-A-4.234.202 ou FR-A-2.658.460, il a été proposé d'effectuer un balayage linéaire alterné de la vitre à essuyer au moyen d'un mécanisme d'essuie-glace du type comportant un chariot de guidage et d'entraînement qui est monté coulissant par rapport à la caisse du véhicule sur au moins un rail de guidage, ou équivalent, qui s'étend le long de la vitre à essuyer, en général le long du bord inférieur de cette vitre.

Le chariot porte une extrémité proximale d'un bras ou d'un balai d'essuie-glace dont l'extrémité distale porte une raclette d'essuyage de la vitre.

Le mécanisme d'essuie-glace comporte aussi des moyens d'entraînement du chariot comprenant par exemple un organe souple d'entraînement en boucle fermée tendu entre deux poulies et qui est relié au chariot, et un moteur d'entraînement qui transmet un mouvement alterné de défilement à l'organe souple d'entraînement.

Grâce à une telle conception, le balai d'essuie-glace porté par le bras d'essuie-glace, ou directement par le chariot, peut effectuer un balayage quasi complet de la vitre à essuyer dont le contour est généralement sensiblement rectangulaire

L'organe souple d'entraînement en boucle fermée est notamment un câble d'entraînement.

La tension du câble est un élément déterminant pour le bon fonctionnement du mécanisme d'essuie-glace.

Afin d'assurer un parcours optimal au câble ainsi qu'une tension automatique et maîtrisée de celui-ci, il a déjà été proposé différentes conceptions de dispositifs de renvoi et de dispositifs tendeurs de câble.

C'est par exemple le cas dans le document DE-C-1.051.139 qui décrit et représente un dispositif tendeur de câble comportant un levier articulé sollicité par un ressort dont l'extrémité libre porte une poulie tournante de renvoi de mouvement dans laquelle passe le câble.

Une telle conception est complexe car elle fait appel à de nombreux composants à assembler entre eux et notamment à une poulie folle dont la roue est tournante agencée à l'extrémité libre du levier articulé.

L'invention vise à proposer une conception simplifiée des moyens de renvoi et de tension du câble.

Dans ce but, l'invention propose un mécanisme d'essuie-glace à balayage linéaire alterné du type comportant un chariot de guidage et d'entraînement qui est monté coulissant sur au moins un rail rigide de guidage fixe et qui porte au moins un balai d'essuie-glace, et du type comportant des moyens d'entraînement du chariot comprenant un moteur électrique qui met en mouvement linéaire un câble dont un brin est lié au chariot et qui passe le long d'au moins un organe de renvoi, comportant une gorge de guidage du câble, qui est monté mobile par rapport à la structure du véhicule et qui est sollicité élastiquement en permanence pour constituer un dispositif tendeur de câble, caractérisé en ce que le corps de l'organe de renvoi dans lequel est formée la gorge de guidage du câble est fixe par rapport au mouvement linéaire du câble qui glisse dans la gorge, et en ce que le dispositif tendeur de câble comporte des moyens élastiques qui sollicitent ledit corps selon un direction globalement perpendiculaire au tronçon du câble qui glisse dans la gorge de guidage.

Selon des modes de réalisation de l'invention :
- le dispositif tendeur de câble comporte un support fixe par rapport auquel le corps de l'organe de renvoi est monté mobile avec interposition de moyens élastiques qui sollicitent le corps de l'organe de renvoi vers une position d'engagement avec le câble pour tendre ce dernier ;
- le corps de l'organe de renvoi est monté coulissant longitudinalement par rapport au support fixe, et les moyens élastiques sollicitent le corps de l'organe de renvoi vers une position avant d'engagement avec le câble ;
- la gorge de guidage du câble est sensiblement en forme d'arc de cercle, et la direction de coulissement du corps de l'organe de renvoi par rapport au support fixe est sensiblement radiale par rapport à la gorge de guidage ;
- lesdits moyens élastiques comportent au moins un ressort de compression agencé selon la direction de coulissement du corps de l'organe de renvoi ;
- le corps de l'organe de renvoi est en forme générale d'un secteur de roue de poulie fixe, et les moyens de guidage du secteur de roue comportent des moyens pour le guider en coulissement dans un plan horizontal parallèle au plan dans lequel s'étend la gorge de guidage du câble, et des moyens pour le guider dans ce plan selon la direction de coulissement longitudinal ;
- le support fixe comporte deux ailes horizontales parallèles de guidage du corps de l'organe de renvoi qui coopèrent avec les faces latérales opposées du secteur de roue pour guider le corps de l'organe de renvoi en coulissement dans un plan horizontal parallèle au plan dans lequel s'étend la gorge de guidage du câble ;
- la partie arrière du corps de l'organe de renvoi, opposée à sa partie avant dans laquelle est formée la gorge de guidage du câble, comporte une cavité longitudinale dans laquelle est reçu en coulissement un plot de guidage appartenant au support fixe et dans lequel est logé un ressort de compression ;
- la partie arrière du corps de l'organe de renvoi, opposée à sa partie avant dans laquelle est formée la gorge de guidage du câble, comporte une cavité longitudinale dans laquelle est reçu en coulissement un plot de guidage appartenant au support fixe et dans lequel est logé un ressort de compression et, en section transversale, les profils complémentaires du plot et de la cavité ne sont pas de révolution autour de la direction longitudinale de coulissement de manière à guider le corps de l'organe de renvoi en coulissement dans un plan horizontal parallèle au plan dans lequel s'étend la gorge de guidage du câble ;
- le corps de l'organe de renvoi est monté tournant par rapport au support fixe ;
- le corps de l'organe de renvoi comporte au moins une roue de poulie fixe qui est portée par un plateau qui est monté pivotant par rapport au support fixe autour d'un axe de pivotement parallèle à l'axe de la roue de poulie fixe et excentré par rapport à ce dernier, et des moyens élastiques sollicitent en permanence le plateau en pivotement autour de son axe ;
- le dispositif tendeur de câble comporte des moyens anti-retour, notamment des moyens du type à crans, qui sont interposés entre le support fixe et le corps de l'organe de renvoi pour empêcher le déplacement de ce dernier dans le sens opposé à celui correspondant à son engagement avec le câble ;
- le corps de l'organe de renvoi est une pièce moulée, notamment en matière plastique ;
- le support fixe est une pièce moulée, notamment en matière plastique.

D'autres caractéristiques et avantages apparaîtront à la lecture de la description détaillée qui va suivre pour la compréhension de laquelle on se reportera aux dessins annexés dans lesquels :
- la figure 1 est une vue schématique en perspective illustrant un mécanisme d'essuie-glace à balayage linéaire alterné comportant différents dispositifs, de conception connue, de renvoi pour le câble;
- la figure 2 est une vue en perspective à grande échelle, avec arrachement partiel, qui illustre un premier mode de réalisation d'un dispositif de renvoi tendeur de câble réalisé conformément aux enseignements de l'invention et agencé à une extrémité du rail de guidage ;
- la figure 3 est une vue en perspective éclatée des principaux composants d'un deuxième mode de réalisation d'un dispositif de renvoi tendeur de câble du même type que celui illustré à la figure 2, représenté sans le câble ;

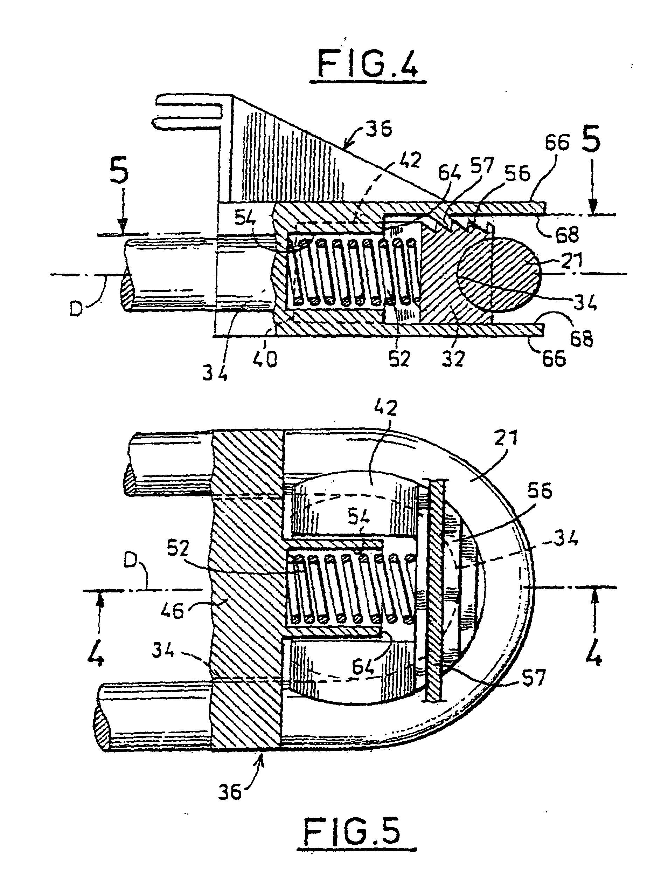

- la figure 4 est une vue à grande échelle, en section longitudinale partielle selon la ligne 4-4 de la figure 5, du dispositif représenté à la figure 3 ;
- la figure 5 est une vue en section selon la ligne 5-5 de la figure 4 ;
- la figure 6 est une vue schématique en perspective d'un troisième mode de réalisation d'un dispositif de renvoi tendeur de câble réalisé conformément aux enseignements de l'invention et agencé sur le rail de guidage ;
- la figue 7 est une vue en perspective selon un autre angle qui illustre les composants d'une variante de réalisation du dispositif de la figure 6, représenté sans le câble ;
- la figure 8 est une vue en perspective du même type que celle de la figure 6 qui illustre un quatrième mode de réalisation d'un dispositif de renvoi tendeur de câble conforme aux enseignements de l'invention ;
- les figures 9 et 10 sont deux vues schématiques en perspective qui illustrent un cinquième mode de réalisation d'un dispositif de renvoi tendeur de câble conforme aux enseignements de l'invention dans lequel le corps de l'organe de renvoi est monté pivotant par rapport au support fixe.

Dans la description qui va suivre, des éléments identiques, similaires ou analogues seront désignés par les mêmes chiffres de référence.

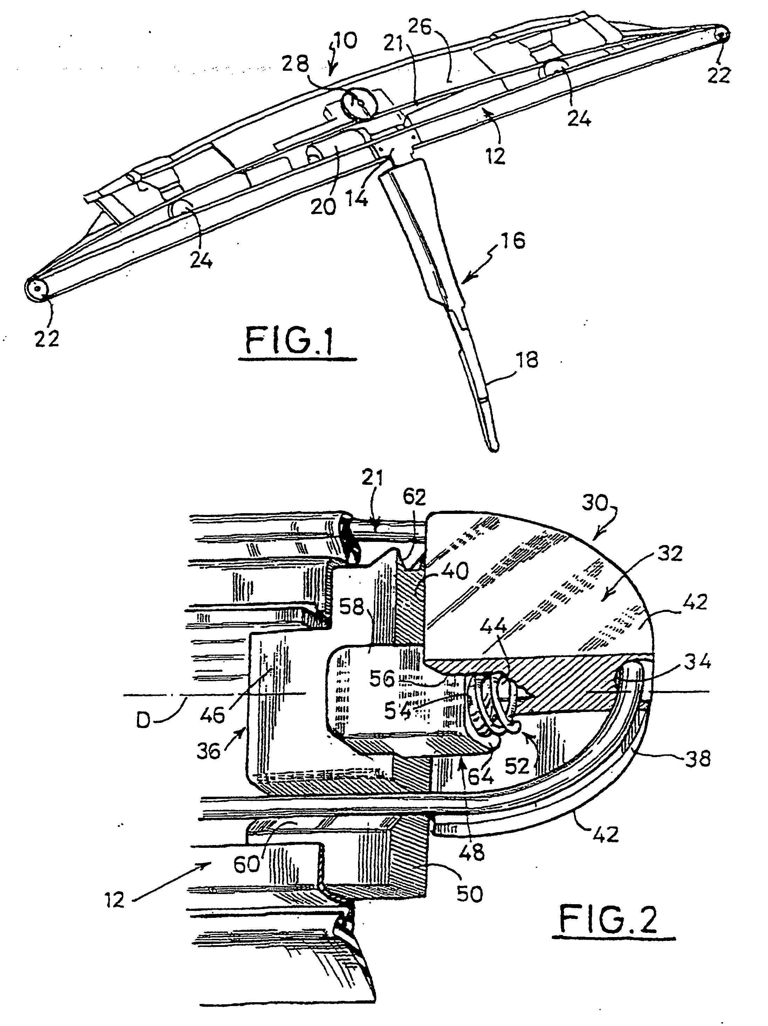

On a représenté à la figure 1 un mécanisme d'essuie-glace 10 à balayage linéaire alterné du type comportant un rail de guidage fixe 12 sur lequel est monté coulissant alternativement et dans les deux sens un chariot 14 qui porte un essuie-glace 16 comportant au moins un balai d'essuie-glace 18 pour l'essuyage linaire alterné d'une vitre (non représentée) d'un véhicule automobile, par exemple d'un pare-brise ou d'une vitre de lunette arrière.

Selon une conception générale connue, pour l'entraînement coulissement alterné du chariot 14 le long du rail de guidage 12, le mécanisme 10 comporte des moyens d'entraînement comportant un motoréducteur 20 qui agit sur le brin d'un câble souple 2 en boucle fermée dont un autre brin est accroché au chariot 14.

Pour former et orienter la boucle du câble 21, celui-ci passe sur différents dispositifs de renvoi qui, selon une conception connue sont par exemple des poulies folles de renvoi 22 agencées aux extrémités opposées du rail 12, d'autres poulies folles intermédiaires de renvoi 24 portées par une platine 26 solidaire du rail 12, ou encore une poulie folle centrale de renvoi 28 portée par la platine 26 et sur laquelle le câble est enroulé selon un tour complet.

On a représenté à la figure 2 un premier mode de réalisation selon l'invention d'un dispositif de renvoi formant aussi tendeur automatique de câble.

Dans ce premier mode de réalisation, le dispositif 30 selon l'invention est destiné à remplacer plus particulièrement une poulie 22, c'est-à-dire qu'il est monté à une extrémité du rail 12.

Le dispositif 30 est constitué pour l'essentiel par un corps 32 dans lequel est formée une gorge 34 de guidage du câble 21 et un support fixe 36 monté à l'extrémité libre du rail 12.

Le corps 32 et le support fixe 36 sont de préférence deux pièces réalisées par moulage en matière plastique.

Conformément aux enseignements de l'invention, par opposition à une poulie tournante de renvoi selon l'état de la technique, le corps 32 de l'organe de renvoi est globalement fixe par rapport au câble, c'est-à-dire que ce dernier, dans son mouvement alterné, glisse dans la gorge de guidage 34.

Selon le premier mode de réalisation illustré à la figure 2, le corps 32 se présente globalement sous la forme d'une demi-roue de poulie fixe de renvoi, c'est-à-dire que la gorge 34 s'étend en demi-cercle dans la face cylindrique convexe avant 38.

Le corps 32 est aussi délimité par sa face transversale verticale arrière plane 40 et par deux faces latérales parallèles opposées horizontales 42.

Le corps 32 comporte une cavité 44, de section transversale de profil carré ou rectangulaire, qui débouche longitudinalement vers l'arrière dans la face transversale 40.

Selon l'invention, le corps 32 comportant la gorge 34 de guidage du câble 21 est monté en coulissement longitudinal, selon une direction "D" par rapport au support fixe 36.

A cet effet, le corps moulé 46 du support fixe 36, emboîté longitudinalement dans l'extrémité ouverte du rail 12, comporte un plot 48 de guidage qui s'étend longitudinalement vers l'avant en saillie depuis une face transversale d'extrémité avant 50 du support fixe 46 et qui est reçu dans la cavité 44.

A cet effet, le profil externe du plot 48 est complémentaire du profil interne, rectangulaire en section transversale, de la cavité 44 de manière à guider le corps 32 de l'organe de renvoi en coulissement selon la direction "D" par rapport au support fixe 36 et de manière à empêcher tout mouvement de rotation du corps 32 autour de l'axe D de déplacement.

Ainsi, le corps 32 de l'organe de renvoi comportant la gorge 34 peut se déplacer selon la direction longitudinale D et dans un plan horizontal correspondant au plan dans lequel s'étend la gorge 34.

Pour constituer un dispositif 30 tendeur du câble 21, un ressort hélicoïdal de compression 52 est interposé longitudinalement entre le support fixe 36 et le corps 32 de l'organe de renvoi pour solliciter élastiquement ce dernier vers l'avant en engagement avec le câble 21, c'est-à-dire de la gauche vers la droite en considérant la figure 2.

Comme cela est illustré à la figure 2, le ressort de compression 52 est par exemple reçu dans un logement cylindrique complémentaire 54 formé dans le plot 48 et il est en appui contre le fond d'extrémité arrière de la cavité 44.

Afin de constituer des moyens anti-retour, c'est-à-dire pour éviter que le corps 32 ne recule vers l'arrière, de la droite vers la gauche en considérant la figure 2, par rapport au support fixe 36, il est par exemple possible de prévoir des crans 56 dans les faces latérales de la cavité 44 qui coopèrent par frottement avec les faces latérales correspondantes du plot 48, ces dernières pouvant être lisses comme cela est représenté à la figure 2, ou bien crantées à titre de variante.

Comme on peut le voir sur la figure 2, le corps 46 du support fixe 36 est, à sa partie arrière, de forme complémentaire de celle de l'extrémité du rail 12 qui le reçoit et il peut aussi comporter des rainures 60 et 62 pour le guidage du câble 21.

Lors de la mise en place du câble 21, on comprime bien entendu initialement au maximum le ressort 52, puis on relâche le corps 32 de façon que sa gorge 34 de guidage du câble 21 vienne en engagement avec ce dernier en le sollicitant élastiquement pour le tendre.

Il est bien entendu possible d'agencer un dispositif de renvoi et de tension du câble 30 à chacune des extrémités longitudinales du rail 12.

Si l'on désire équiper une seule des extrémités du rail 12 avec un dispositif tendeur de câble, l'autre extrémité peut être équipée du même dispositif sans le ressort 52, de manière à standardiser les composants, la position fixe du corps 32 par rapport au support fixe 36 étant définie par la venue en butée de la face transversale d'extrémité avant 64 du plot de guidage 48 avec le fond transversal arrière de la cavité 44.

Il est bien entendu aussi possible de remplacer le dispositif tendeur par un simple dispositif de renvoi moulé en matière plastique en une seule pièce correspondant globalement à l'association du corps fixe 36 et du corps 32.

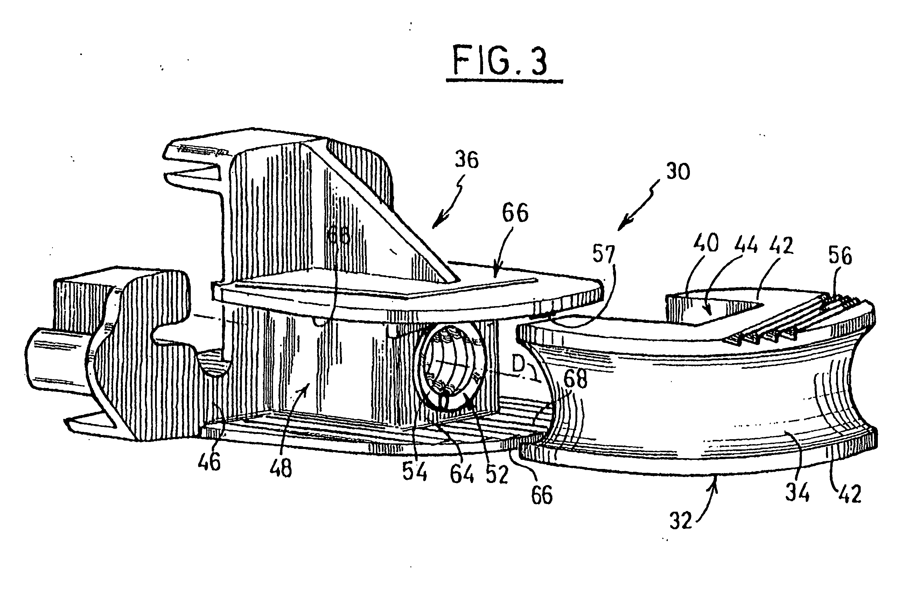

Le dispositif 30, selon le deuxième mode de réalisation représenté à la figure 3, est globalement du même type que le précédent, c'est-à-dire qu'il s'agit d'un dispositif de renvoi et tendeur de câble destiné à être monté à une extrémité du rail 12 et dans lequel le corps 32 de l'organe de renvoi est en forme d'une demi-roue de poulie fixe qui est montée mobile selon une direction longitudinale D par rapport au support fixe 36.

Ce deuxième mode de réalisation diffère du précédent d'une part de la conformation de la partie arrière du corps 46 du support fixe 36 adaptée à une autre forme de rail de guidage et; d'autre part, par la conception des moyens de guidage en coulissement longitudinal du corps 32 de l'organe de renvoi par rapport au support fixe 36.

En effet, la cavité 44 est débouchante verticalement vers le haut et vers le bas dans les faces latérales 42 et le corps 46 comportent deux joues horizontales parallèles et opposées 66 entre lesquelles sont reçues les faces latérales 42 du corps 32.

Ainsi, les faces 42 sont reçues en coulissement entre les faces intérieures en vis-à-vis 68 des ailes 66 pour améliorer le guidage en coulissement et maintenir le corps 32 dans un plan horizontal de guidage qui contient la gorge 34, ceci grâce à l'augmentation des surfaces mutuelles de guidage entre les deux composants.

De plus, cette conception permet d'aménager les crans de blocage du dispositif anti-retour d'une part sous la forme de crans 56 formés par exemple dans la face latérale supérieure 42 du corps 32 de l'organe de renvoi et, d'autre part, sous la forme d'un cran complémentaire 57 agencé en vis-à-vis sur la face intérieure 68 de l'aile horizontale supérieure 66 du corps 46.

L'effet de cliquet des moyens anti-retour est obtenu grâce à l'élasticité de la partie d'extrémité longitudinale avant de l'aile supérieure 66 qui porte le cran 57 et qui peut se déformer élastiquement, grâce à l'effet de rampe du à la conformation des autres crans 56, lorsque l'effort élastique exercé par le ressort 52 et le relâchement ou la détente du câble 21 sont tels que le franchissement d'un cran est rendu nécessaire.

De même, la remise à zéro du dispositif de renvoi formant tendeur de câble est obtenu en soulevant l'aile supérieur 66 et en poussant longitudinalement vers l'arrière, c'est-à-dire de la droite vers la gauche en considérant la figure 3, le corps 32 par rapport au support fixe 46.

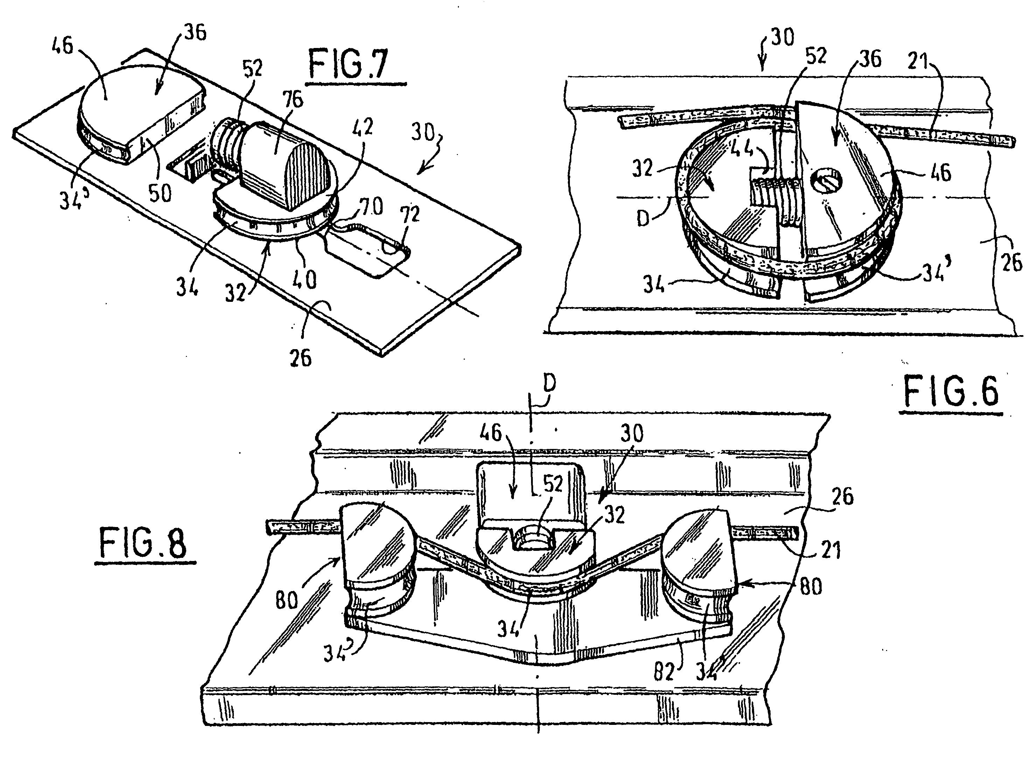

Le troisième mode de réalisation représenté aux figures 6 et 7 est un dispositif 30 qui est plus particulièrement destiné à remplacer la poulie centrale 28 selon l'état de la technique.

Sa conception générale et son principe de fonctionnement sont globalement similaires à ceux exposés en référence aux deux premiers modes de réalisation.

En effet, le dispositif 30 comporte un organe mobile de renvoi formant tendeur de câble 32 en forme de demi-roue de poulie fixe qui est monté mobile longitudinalement par rapport à un support fixe 36 dont le corps 46 est vissé sur la platine 26.

La conception générale du corps 32 de l'organe de renvoi est analogue à celles décrites en référence aux figures 2 et 3, c'est-à-dire qu'il est sollicité longitudinalement selon la direction D par un ressort hélicoïdal de compression 52 interposé entre le corps 32 et le support fixe 36.

Afin que le câble 21 puisse effectuer un tour complet autour du dispositif 30, le corps 46 du support fixe 36 est également conformé en demi-roue de poulie fixe avec une gorge arrière 34' dans laquelle est enroulé et glisse le câble 21, de la même manière que dans la gorge 34 de l'organe mobile 32.

Dans la variante représentée à la figure 7, on a illustré de manière schématique les moyens de guidage en coulissement, selon la direction D du corps 32 par rapport à la platine 26 sur laquelle est fixé le support fixe 36 en forme de demi-roue de poulie fixe.

Les moyens de guidage sont ainsi constitués par une rainure longitudinale, de direction D, formée dans la tôle de la platine 26 et dans laquelle est reçu un doigt de guidage, non visible sur la figure 7, réalisé venu de moulage avec le corps 32 et qui s'étend également vers le bas en dessous de la face latérale inférieure 40.

A son extrémité avant, la rainure 70 comporte un tronçon élargi 72 permettant le montage du doigt de guidage du corps 32 dans la rainure 70.

La face transversale arrière du ressort 52 est ici prévue pour venir en appui longitudinal directement contre la face transversale d'extrémité avant 50 du corps 46 du support fixe 36, tandis que le ressort 52 est ici maintenu et guidé dans une partie en relief 76, réalisée venue de matière par moulage, qui s'étend au-dessus de la face latérale supérieure 42 du corps 32.

Le quatrième mode de réalisation du dispositif de renvoi formant tendeur de câble 30 illustré à la figure 8 est destiné à remplacer une poulie intermédiaire de guidage 24 selon l'état de la technique.

Ainsi, le support fixe 46 est porté par la platine 26 et il sollicite le corps mobile 32 de l'organe de renvoi selon une direction longitudinale D qui est globalement transversale et perpendiculaire à la direction générale du tronçon du câble 21 qui s'étend au droit du dispositif 30.

Le corps 32 est ici aussi réalisé sous la forme d'une demi-roue de poulie fixe sollicitée élastiquement par le ressort 52 et qui comporte une gorge 34 dans laquelle glisse le tronçon correspondant du câble 21.

Afin d'obtenir l'effet de tension du câble 21, par réaction, il est prévu deux demi-poulies fixes de renvoi 80 dont chacune comporte une gorge 34' pour constituer un parcours dévié du câble 21 entre l'organe de renvoi 32 et les deux organes fixes 80, ceux-ci pouvant avantageusement être réalisés venus de matière par moulage avec le support 46 auquel ils sont reliés par un plateau inférieur 82.

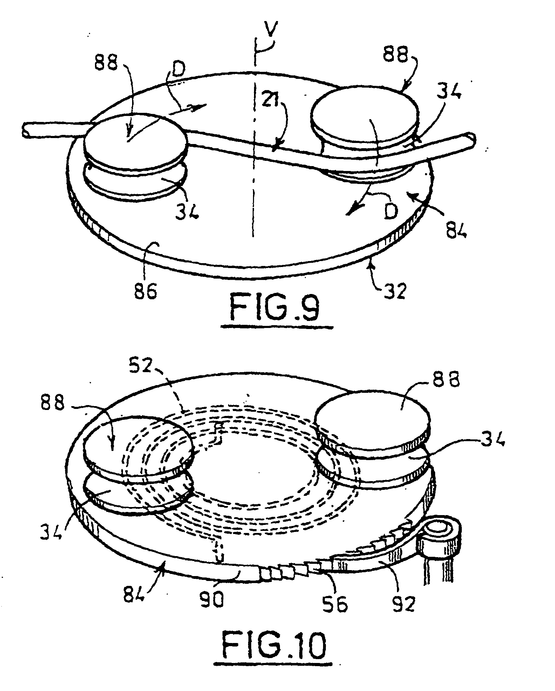

Dans le mode de réalisation illustré schématiquement aux figures 9 et 10, l'organe de renvoi formant tendeur de câble est ici monté pivotant autour d'un axe vertical V, c'est-à-dire autour d'un axe globalement perpendiculaire au plan dans lequel s'étend le câble 21.

Le corps de l'organe de renvoi 32 est constitué par un plateau horizontal 84, monté pivotant par rapport à un support fixe (non représenté mais qui peut être par exemple constitué directement par la tôle de la platine 26) autour de l'axe vertical V et qui porte sur sa face supérieure 86 deux roues 88 de poulies fixes, qui sont avantageusement réalisées venues de matière par moulage en matière plastique et dont chacune comporte une gorge 34 dans laquelle glisse le câble 21.

Les deux roues fixes 88 sont diamétralement opposées et le plateau 84 est sollicité en pivotement autour de son axe V pour constituer un trajet dévié du câble 21 entre les deux roues fixes 88 en glissant dans les gorges 34 et 34'.

Ainsi, au niveau de chaque gorge 34, 34' le câble 21 est ici aussi sollicité globalement selon une direction D qui peut être assimilée à une direction perpendiculaire à la direction du tronçon du câble 21 au droit de la gorge.

Pour solliciter élastiquement en permanence l'organe 32 en pivotement autour de l'axe V, dans le sens horaire en considérant les figures 9 et 10 correspondant à la tension du câble 21, il faut interposer un ressort 52 entre le plateau 84 et le support fixe.

Comme cela est schématisé à la figure 10, le ressort 52 est par exemple un ressort en spirale disposé en dessous du plateau 84 et dont une extrémité agit sur le plateau 84 tandis que l'autre extrémité est accrochée au support fixe.

Afin de constituer des moyens anti-retour, comme cela est schématisé à la figure 10, le bord latéral 90 du plateau 84 peut comporter des crans 56 avec lesquels coopère un cliquet 92 porté par le support fixe.

L'invention n'est pas limitée aux modes de réalisations qui viennent d'être décrits.

Le ressort hélicoïdal de compression peut notamment être remplacé par tout élément élastique assurant la même fonction et par exemple par un ressort à lame dans le cas du mode de réalisation illustré à la figure 8, le ressort à lame pouvant être porté par le support fixe ou par l'organe de renvoi qui peut être aussi surmoulé sur le ressort.

## Revendications

1. Mécanisme d'essuie-glace (10) à balayage linéaire alterné du type comportant un chariot (14) de guidage et d'entraînement qui est monté coulissant sur au moins un rail rigide de guidage (12) fixe et qui porte au moins un balai d'essuie-glace (18), et du type comportant des moyens d'entraînement du chariot comprenant un moteur électrique (20) qui met en mouvement linéaire un câble (21) dont un brin est lié au chariot (14) et qui passe le long d'au moins un organe de renvoi (30), comportant une gorge (34) de guidage du câble (21), qui est monté mobile par rapport à la structure du véhicule et qui est sollicité élastiquement en permanence pour constituer un dispositif tendeur de câble,
**caractérisé en ce que** le corps de l'organe (32) de renvoi dans lequel est formée la gorge (34) de guidage du câble (21) est fixe par rapport au mouvement linéaire du câble (21) qui glisse dans la gorge, et **en ce que** le dispositif tendeur de câble comporte des moyens élastiques (52) qui sollicitent ledit corps (32) selon une direction (D) globalement perpendiculaire au tronçon du câble (21) qui glisse dans la gorge de guidage (34).

2. Mécanisme d'essuie-glace selon la revendication précédente, **caractérisé en ce que** le dispositif tendeur de câble (30) comporte un support fixe (36) par rapport auquel le corps (32) de l'organe de renvoi est monté mobile avec interposition de moyens élastiques (52) qui sollicitent le corps de l'organe de renvoi vers une position d'engagement avec le câble (21) pour tendre ce dernier.

3. Mécanisme d'essuie-glace selon la revendication 2, **caractérisé en ce que** le corps (32) de l'organe de renvoi est monté coulissant longitudinalement (D) par rapport au support fixe (36), et **en ce que** les moyens élastiques (52) sollicitent le corps de l'organe de renvoi vers une position avant d'engagement avec le câble.

4. Mécanisme d'essuie-glace selon la revendication précédente, **caractérisé en ce que** la gorge de guidage (34) du câble (21) est sensiblement en forme d'arc de cercle, et **en ce que** la direction (D) de coulissement du corps (32) de l'organe de renvoi par rapport au support fixe (36) est sensiblement radiale par rapport à la gorge de guidage.

5. Mécanisme d'essuie-glace selon l'une des revendications 2 à 4, **caractérisé en ce que** lesdits moyens élastiques comportent au moins un ressort de compression (52) agencé selon la direction (D) de coulissement du corps de l'organe de renvoi.

6. Mécanisme d'essuie-glace selon l'une quelconque des revendications 2 à 5, **caractérisé en ce que** le corps (32) de l'organe de renvoi est en forme générale d'un secteur de roue de poulie fixe, et **en ce que** les moyens de guidage du secteur de roue comportent des moyens pour le guider en coulissement dans un plan horizontal parallèle au plan dans lequel s'étend la gorge de guidage (34) du câble (21), et des moyens pour le guider dans ce plan selon la direction (D) de coulissement longitudinal.

7. Mécanisme d'essuie-glace selon la revendication 6, **caractérisé en ce que** le support fixe (36, 46) comporte deux ailes horizontales paralfèles (66) de guidage du corps (32, 40) de l'organe de renvoi qui coopèrent avec les faces latérales opposées (40) du secteur de roue pour guider le corps (32) de l'organe de renvoi en coulissement dans un plan horizontal parallèle au plan dans lequel s'étend la gorge (34) de guidage du câble (21).

8. Mécanisme d'essuie-glace selon la revendication précédente, **caractérisé en ce que** la partie arrière du corps (32) de l'organe de renvoi, opposée à sa partie avant dans laquelle est formée la gorge de guidage (34) du câble (21), comporte une cavité longitudinale (44) dans laquelle est reçu en coulissement un plot de guidage (48) appartenant au support fixe (36, 46) et dans lequel est logé un ressort de compression (52).

9. Mécanisme d'essuie-glace selon la revendication 7, **caractérisé en ce que** la partie arrière (40) du corps (32) de l'organe de renvoi, opposée à sa partie avant dans laquelle est formée la gorge de guidage (34) du câble (21), comporte une cavité longitudinale (44) dans laquelle est reçu en coulissement un plot de guidage (48) appartenant au support fixe (36) et dans lequel est logé un ressort de compression (52), et **en ce que**, en section transversale, les profils complémentaires du plot (48) et de la cavité (44) ne sont pas de révolution autour de la direction longitudinale (D) de coulissement de manière à guider le corps (32) de l'organe de renvoi en coulissement dans un plan horizontal parallèle au plan dans lequel s'étend la gorge de guidage du câble.

10. Mécanisme d'essuie-glace selon la revendication 2, **caractérisé en ce que** le corps (32,84,88) de l'organe de renvoi est monté tournant par rapport au support fixe.

11. Mécanisme d'essuie-glace selon la revendication précédente, **caractérisé en ce que** le corps de l'organe de renvoi comporte au moins une roue de poulie fixe (88) qui est portée par un plateau (84) qui est monté pivotant par rapport au support fixe autour d'un axe (V) de pivotement parallèle à l'axe de la roue de poulie fixe et excentré par rapport à ce dernier, et **en ce que** des moyens élastiques (52) sollicitent en permanence le plateau (84) en pivotement autour de son axe (V).

12. Mécanisme d'essuie-glace selon l'une quelconque des revendications 2 à 11, **caractérisé en ce que** le dispositif tendeur de câble comporte des moyens anti-retour, notamment des moyens du type à crans (56), qui sont interposés entre le support fixe (36) et le corps (32) de l'organe de renvoi pour empêcher le déplacement de ce dernier dans le sens opposé à celui correspondant à son engagement avec le câble (21).

13. Mécanisme d'essuie-glace selon l'une quelconque des revendications 2 à 12, **caractérisé en ce que** le corps (32) de l'organe de renvoi est une pièce moulée, notamment en matière plastique.

14. Mécanisme d'essuie-glace selon l'une quelconque des revendications 2 à 13, **caractérisé en ce que** le support fixe (36) est une pièce moulée, notamment en matière plastique.

## Patentansprüche

1. Scheibenwischvorrichtung (10) mit abwechselnder linearer Wischbewegung, die einen Führungs- und Antriebsschlitten (14) umfasst, der gleitend auf mindestens einer starren Führungsschiene (12) montiert ist und mindestens ein Scheibenwischerblatt (18) trägt, und die Antriebsmittel des Schlittens mit einem Elektromotor (20) aufweist, der ein Kabel (21) in eine lineare Bewegung versetzt, von dem ein Strang mit dem Schlitten (14) verbunden ist und das entlang mindestens eines Umlenkorgans (30) verläuft, mit einem Führungshals (34) des Kabels (21), der in Bezug auf die Fahrzeugstruktur mobil montiert ist und ständig elastisch beaufschlagt wird, um eine Kabelspanneinrichtung zu bilden,
**dadurch gekennzeichnet, dass** der Körper des Umlenkorgans (32), in dem der Führungshals (34) des Kabels (21) ausgebildet ist, in Bezug auf die lineare Bewegung des in dem Hals gleitenden Kabels (21) fest ist, und dass die Kabelspanneinrichtung elastische Mittel (52) aufweist, die den besagten Körper (32) in eine insgesamt senkrecht zum Abschnitt des in dem Führungshals (34) gleitenden Kabels (21) verlaufende Richtung beaufschlagen.

2. Scheibenwischvorrichtung nach dem vorangehenden Anspruch,
**dadurch gekennzeichnet**, das die Kabelspanneinrichtung (30) einen festen Träger (36) umfasst, in Bezug auf den der Körper (32) des Umlenkorgans mobil montiert ist, mit Zwischenmontage von elastischen Mitteln (52), die den Körper des Umlenkorgans in eine Eingriffsposition mit dem Kabel (21) bringen, um das Letztere zu spannen.

3. Scheibenwischvorrichtung nach Anspruch 2,
**dadurch gekennzeichnet, dass** der Körper (32) des Umlenkorgans in Längsrichtung (D) in Bezug auf den festen Träger (36) gleitend montiert ist, und dass die elastischen Mittel (52) den Körper des Umlenkorgans in eine vordere Eingriffsposition mit dem Kabel beaufschlagen.

4. Scheibenwischvorrichtung nach dem vorangehenden Anspruch,
**dadurch gekennzeichnet, dass** der Führungshals (34) des Kabels (21) etwa kreisbogenförmig ist, und dass die Gleitrichtung (D) des Körpers (32) des Umlenkorgans in Bezug auf den festen Träger (36) etwa radial in Bezug auf den Führungshals ist.

5. Scheibenwischvorrichtung nach einem der Ansprüche 2 bis 4,
**dadurch gekennzeichnet, dass** die besagten elastischen Mittel mindestens eine Druckfeder (52) umfassen, die in Gleitrichtung (D) des Körpers des Umlenkorgans angeordnet ist.

6. Scheibenwischvorrichtung nach einem der Ansprüche 2 bis 5,
**dadurch gekennzeichnet, dass** der Körper (32) des Umlenkorgans die allgemeine Form eines Radabschnitts einer festen Rolle aufweist, und dass die Führungsmittel des Radabschnitts Mittel umfassen, um ihn in einer horizontalen, parallel zur Ebene, in der sich der Führungshals (34) des Kabels (21) erstreckt, verlaufenden Ebene zu führen, sowie Mittel, um ihn in dieser Ebene nach der Längsgleitrichtung (D) zu führen.

7. Scheibenwischvorrichtung nach Anspruch 6,
**dadurch gekennzeichnet, dass** der feste Träger (36, 46) zwei parallele horizontale Führungsflügel (66) des Körpers (32, 40) des Umlenkorgans umfasst, die mit den dem Radabschnitt gegenüber liegenden Seitenflächen (40) zusammenwirken, um den Körper (32) des Umlenkorgans in einer horizontalen Ebene zu führen, die parallel zu der Ebene verläuft, in der sich der Führungshals (34) des Kabels (21) erstreckt.

8. Scheibenwischvorrichtung nach dem vorangehenden Anspruch,
**dadurch gekennzeichnet, dass** der rückwärtige Teil des Körpers (32) des Umlenkorgans, der seinem vorderen Teil, in dem der Führungshals (34) des Kabels (21) ausgebildet ist, gegenüber liegt, eine Längsaussparung (44) umfasst, in der ein Führungsstück (48) des festen Trägers (36, 46) gleitet und in dem eine Druckfeder (52) gelagert ist.

9. Scheibenwischvorrichtung nach Anspruch 7,
**dadurch gekennzeichnet, dass** der rückwärtige Teil (40) des Körpers (32) des Umlenkorgans, der seinem vorderen Teil, in dem der Führungshals (34) des Kabels (21) ausgebildet ist, gegenüber liegt, eine Längsaussparung (44) umfasst, in der ein Führungsstück (48) des festen Trägers 36) gleitet und in dem eine Druckfeder (52) gelagert ist, und dass sich im Querschnitt die zusätzlichen Profile des Führungsstücks (48) und der Aussparung (44) nicht drehbar um die Gleitlängsrichtung (D) befinden, so dass der Körper (32) des Umlenkorgans in einer horizontalen Ebene geführt wird, die parallel zu der Ebene verläuft, in der sich der Führungshals des Kabels erstreckt.

10. Scheibenwischvorrichtung nach Anspruch 2,
**dadurch gekennzeichnet, dass** der Körper (32, 84, 88) des Umlenkorgans drehbar in Bezug auf den festen Träger montiert ist.

11. Scheibenwischvorrichtung nach dem vorangehenden Anspruch,
**dadurch gekennzeichnet, dass** der Körper des Umlenkorgans mindestens ein festes Rollenrad (88) umfasst, das von einer Platte (84) getragen wird, die in Bezug auf den festen Körper schwenkbar um eine Schwenkachse (V) montiert ist, die parallel zur Achse des festen Rollenrads verläuft und in Bezug auf das letztere außermittig gelagert ist, und dass elastische Mittel (52) permanent die um ihre Achse (V) schwenkbare Platte (84) beaufschlagen.

12. Scheibenwischvorrichtung nach einem der Ansprüche 2 bis 11,
**dadurch gekennzeichnet, dass** die Kabelspanneinrichtung Rücklaufsicherungsmittel, insbesondere Mittel mit Nocken (56), umfasst, die zwischen dem festen Träger (36) und dem Körper (32) des Umlenkorgans angeordnet sind, um das Verschieben des Letzteren in die Richtung zu verhindern, die derjenigen seines Eingreifens mit dem Kabel (21) gegenüberliegt.

13. Scheibenwischvorrichtung nach einem der Ansprüche 2 bis 12,
**dadurch gekennzeichnet, dass** der Körper (32) des Umlenkorgans ein Formteil ist, insbesondere aus Kunststoff.

14. Scheibenwischvorrichtung nach einem der Ansprüche 2 bis 13,
**dadurch gekennzeichnet, dass** der feste Träger (36) ein Formteil ist, insbesondere aus Kunststoff.

## Claims

1. A windscreen wiper mechanism (10) with alternating linear sweep of the type comprising a guidance and drive carriage (14) which is mounted so as to slide on at least one rigid fixed guide rail (12) and which carries at least one wiper blade (18), and of the type comprising means of driving the carriage comprising an electric motor (20) which puts in linear movement a cable (21), one length of which is connected to the carriage (14) and which passes along at least one return member (30), comprising a groove (34) for guiding the cable (21), which is mounted so as to be able to move with respect to the vehicle structure and which is continuously acted on elastically in order to constitute a cable tensioning device,
**characterised in that** the body (32) of the return member in which the groove (34) guiding the cable (21) is formed is fixed with respect to the linear movement of the cable (21), which slides in the groove, and **in that** the cable tensioning device comprises elastic means (52) which act on the said body (32) in a direction (D) roughly perpendicular to the length of the cable (21) which slides in the guide groove (34).

2. A wiper mechanism according to the preceding claim, **characterised in that** the cable tensioning device (30) comprises a fixed support (36) with respect to which the body (32) of the return member is mounted so as to be able to move with the interposing of elastic means (52) which force the body of the return member towards a position of engagement with the cable (21) in order to tension the latter.

3. A wiper mechanism according to Claim 2, **characterised in that** the body (32) of the return member is mounted so as to slide longitudinally (D) with respect to the fixed support (36), and **in that** the elastic means (52) force the body of the return member towards a forward position of engagement with the cable.

4. A wiper mechanism according to the preceding claim, **characterised in that** the groove (34) guiding the cable (21) is substantially in the form of an arc of a circle, and **in that** the direction (D) of sliding of the body (32) of the return member with respect to the fixed support (36) is substantially radial with respect to the guide groove.

5. A wiper mechanism according to one of Claims 2 to 4, **characterised in that** the said elastic means comprise at least one compression spring (52) arranged in the direction (D) of sliding of the body of the return member.

6. A wiper mechanism according to any one of Claims 2 to 5, **characterised in that** the body (32) of the return member is in the general form of a sector of a fixed pulley wheel, and **in that** the means of guiding the wheel sector comprise means for guiding it slidably in a horizontal plane parallel to the plane in which the groove (34) guiding the cable (21) lies, and means for guiding it in this plane in the longitudinal sliding direction (D).

7. A wiper mechanism according to Claim 6, **characterised in that** the fixed support (36, 46) comprises two parallel horizontal flanges (66) for guiding the body (32, 40) of the return member which cooperate with the opposite lateral faces (40) of the wheel sector in order to guide the body (32) of the return member slidably in a horizontal plane parallel to the plane in which the groove (34) guiding the cable (21) extends.

8. A wiper mechanism according to the preceding claim, **characterised in that** the rear part of the body (32) of the return member, opposite to its front part in which the groove (34) guiding the cable (21) is formed, comprises a longitudinal cavity (44) in which there is slidably received a guide stud (48) belonging to the fixed support (36, 46) and in which a compression spring (52) is housed.

9. A wiper mechanism according to Claim 7, **characterised in that** the rear part (40) of the body (32) of the return member, opposite to its front part in which the groove (34) guiding the cable (21) is formed, comprises a longitudinal cavity (44) in which there is slidably received a guide stud (48) belonging to the fixed support (36) and in which a compression spring (52) is housed and **in that**, in transverse section, the complementary profiles of the stud (48) and of the cavity (44) are not of revolution about the longitudinal sliding direction (D) so as to guide the body (32) of the return member slidably in a horizontal plane parallel to the plane in which the groove guiding the cable extends.

10. A wiper mechanism according to Claim 2, **characterised in that** the body (32, 84, 88) of the return member is mounted so as to turn with respect to the fixed support.

11. A wiper mechanism according to the preceding claim, **characterised in that** the body of the return member comprises at least one fixed pulley wheel (88) which is carried by a plate (84) which is mounted so as to pivot with respect to the fixed support about a pivot axis (V) parallel to the axis of the fixed pulley wheel and off centre with respect to the latter, and **in that** elastic means (52) continuously force the plate (84) to pivot about its axis (V).

12. A wiper mechanism according to any one of Claims 2 to 11, **characterised in that** the cable tensioning device comprises non-return means, in particular means of the type with notches (56), which are interposed between the fixed support (36) and the body (32) of the return member in order to prevent the movement of the latter in the direction opposite to that corresponding to its engagement with the cable (21).

13. A wiper mechanism according to any one of Claims 2 to 12, **characterised in that** the body (32) of the return member is a moulded piece, in particular made from a plastic material.

14. A wiper mechanism according to any one of Claims 2 to 13, **characterised in that** the fixed support (36) is a moulded piece, in particular made from a plastic material.
